# EUROPÄISCHE PATENTSCHRIFT

(11) **EP 1 164 402 B1**
(45) Veröffentlichungstag und Bekanntmachung des Hinweises auf die Patenterteilung: **28.04.2010**
(21) Anmeldenummer: 01112882.4
(22) Anmeldetag: 01.06.2001
(51) Int. Cl.: G02B 21/00, G02B 6/12, G02F 1/35

(54) **Scanmikroskop mit mehrbandiger Beleuchtung und optisches Bauelement für ein Scanmikroskop mit mehrbandiger Beleuchtung**
Scanning microscope with multiband illumination and optical element for a scanning microsscope with multiband illumination
Microscope à balayage avec illumination multibande et élément optique pour un microscope à balayage avec illumination multibande

(30) Priorität: 29.03.2001 DE 10115577; 17.06.2000 DE 10030013
(43) Veröffentlichungstag der Anmeldung: 19.12.2001
(73) Patentinhaber: Leica Microsystems CMS GmbH, 35578 Wetzlar (DE)
(72) Erfinder: Birk, Holger, Dr., 74909 Meckesheim (DE); Storz, Rafael, Dr., 69245 Bammental (DE); Engelhardt, Johann, Dr., 76669 Bad Schönborn (DE)
(74) Vertreter: Schaumburg, Thoenes, Thurn, Landskron, Eckert

(56) Entgegenhaltungen:
- DE-A- 19 622 359
- DE-A- 19 702 753
- US-A- 5 161 053
- RANKA J K ET AL: "VISIBLE CONTINUUM GENERATION IN AIR-SILICA MICROSTRUCTURE OPTICAL FIBERS WITH ANOMALOUS DISPERSION AT 800 NM" OPTICS LETTERS, OPTICAL SOCIETY OF AMERICA, WASHINGTON, US, Bd. 25, Nr. 1, 1. Januar 2000 (2000-01-01), Seiten 25-27, XP000928530 ISSN: 0146-9592

## Beschreibung

Die Erfindung betrifft ein optisches Bauelement für ein Scanmikroskop mit mehrbandiger Beleuchtung.

In dem europäischen Patent EP-0 495 930 ist ein konfokales Mikroskopsystem für die Mehrfarbenfluoreszenz offenbart. Im Detektions- und Beobachtungsstrahlengang des Mikroskopsystems ist ein dichroitischer Spiegel vorgesehen, der mehrere Wellenlängenbereiche passieren lässt. Der hier offenbarte dichroitische Spiegel ist jedoch nur für bestimmte Wellenlängenbereiche ausgelegt. Sollte das Bedürfnis bestehen, mit einer anderen Kombination von Wellenlängenbereichen Untersuchungen durchführen zu wollen, so ist es notwendig, den dichroitischen Spiegel gegen einen für diese Kombination von Wellenlängenbereichen geeigneten auszutauschen. Dies schränkt die flexible Einsetzbarkeit des Gerätes erheblich ein.

Die deutsche Offenlegungsschrift 198 29 954 offenbart einen Strahlteiler in einem Laser-Scanning-Mikroskop. Der Strahlteiler im Strahlengang des Laser-Scanning-Mikroskops dient zur Trennung des Anregungs- und Emissionsstrahlengangs. Der Strahlteiler besteht vorzugsweise aus Farbgläsern, die auswechselbar sind. Zum Auswechseln der Farbgläser sind diese auf einem Teilerevolver angeordnet und werden je nach Verwendung in den Strahlengang gedreht. Diese Vorrichtung hat jedoch den Nachteil, dass bei auswechselbaren optischen Elementen im Strahlengang eines Laser-Scanning-Mikroskops, oftmals eine Nachjustierung erforderlich ist

Der vorliegenden Erfindung liegt die Aufgabe zugrunde, ein optisches Bauelement zum Einsetzen in ein Scanmikroskop zu schaffen, das die Untersuchung einer Probe mit verschiedenen Wellenlängen und/oder Wellenlängenbereichen erlaubt.

Die Aufgabe wird gelöst durch die Merkmale des Anspruchs 1. Vorteilhafte Weiterbildungen sind in den abhängigen Ansprüchen angegeben.

Es ist von Vorteil ein optisches Bauelement mit einem Gehäuse zusammenzufassen und als Modul in den Strahlengang eines Scanmikroskops, einzubringen. Das optische Bauelement umfasst einen Strahlteiler, ein Beleuchtungspinhole, ein Detektionspinhole und einen Referenzdetektor. Das optische Bauelement ist derart im Beleuchtungs- und Detektionsstrahlengang des Scanmikroskops angeordnet, dass das Beleuchtungslicht bezüglich der Senkrechten des Strahlteilers unter einem derartigen Winkel auftrifft, dass Polarisationseffekte minimal sind. Weiter ist von Vorteil, wenn dem Strahlteiler, dem Beleuchtungspinhole und dem Detektionspinhole jeweils mindestens ein Justagemittel zugeordnet ist.

Hinzu kommt, dass das optisches Bauelement in ein Scanmikroskop eingesetzt werden kann. Das Scanmikroskop umfasst eine Lichtquelle, die aus mindestens einem Laser und einem mikrostrukturiertem Material besteht, in das das Licht des Lasers einkoppelbar ist. Es hat sich gezeigt, dass es besonders vorteilhaft ist, wenn ein Referenzdetektor in einem durch den Strahlteiler hindurchtretendes Licht definierten Referenzstrahl angeordnet ist. Der Referenzdetektor ermittelt aus dem Licht des Referenzstrahls eine elektronische Größe, die an eine Regelungselektronik überführbar ist. Entsprechend der elektronischen Größe wird die Intensität der Lichtquelle derart geregelt, dass an einer Probe immer eine konstante Lichtleistung herrscht.

Ein weiterer Vorteil ist, dass das optisches Bauelement von einem Gehäuse umschlossen ist. Dadurch ist eine Verstellung und/oder Beschädigung der einzelnen Elemente im Gehäuse weitestgehend unterbunden. Das Gehäuse umfasst eine erste Öffnung zum Eintritt des Beleuchtungslichts, eine zweite Öffnung zum Austritt des Beleuchtungslichts und zum Eintritt des Detektionslichts und eine dritte Öffnung zum Austritt des Detektionslichts. Das Beleuchtungspinhole ist der ersten Öffnung und das Detektionspinhole der dritten Öffnung zugeordnet. Ferner ist der Strahlteiler ortsfest bezüglich des Beleuchtungs- und Detektionsstrahlenganges angeordnet.

Weitere vorteilhafte Ausgestaltungen der Erfindung können den Unteransprüchen entnommen werden.

In der Zeichnung ist der Erfindungsgegenstand schematisch dargestellt und wird anhand der Figuren nachfolgend beschrieben. Dabei zeigen:
- Fig. 1:: eine schematische Ansicht eines Konfokalmikroskops mit der erfindungsgemäßen Anordnung;
- Fig. 2:: eine Ansicht der räumlichen Anordnung des Strahlteilers bezüglich des Beleuchtungslichts und des Detektionslichts; und
- Fig. 3:: eine schematische Darstellung eines Strahlteilermoduls gemäß der gegenwärtigen Erfindung.

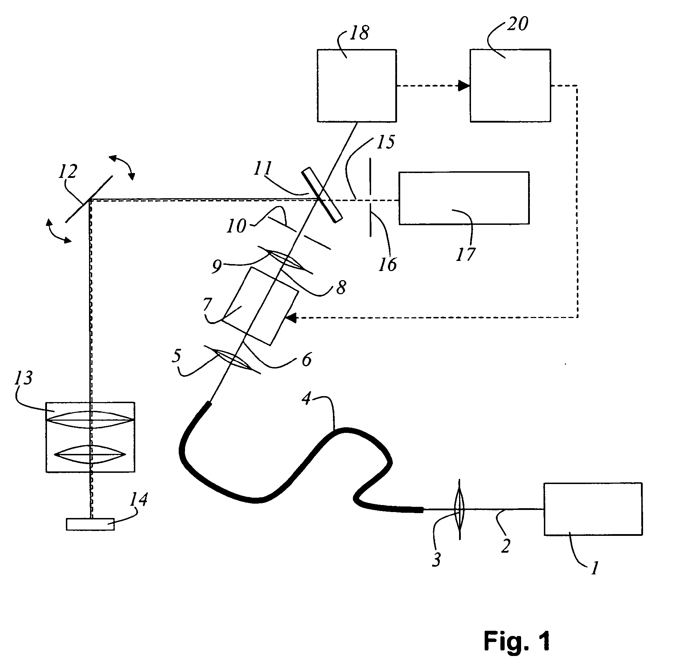

Fig. 1 zeigt ein Konfokalmikroskop, das ein optisches Bauelement 4 zur spektralen Aufweitung eines von einem Pulslaser 1 erzeugten Laserimpulses verwendet. Der Pulslaser 1 definiert einen gepulsten Laserstrahl 2, der durch das optische Bauelement 4 geleitet wird. Das optische Bauelement 4 ist ein "photonic-band-gap-material" bzw. eine entsprechend mikrostrukturierte Faser oder eine konventionelle getaperte Faser. Bei Verwendung einer Faser wird der Laserstrahl 2 mittels einer Einkoppeloptik 3 in die Faser eingekoppelt. Aus dem optischen Bauelement 4 tritt ein spektral breitbandiges Beleuchtungslicht 6 aus, das von einer ersten Optik 5 einem wellenlängen- und/oder intensitätsselektierenden Mittel 7 zugeführt wird. Die ausgewählten Wellenlängen oder Wellenlängenbereiche werden als Beleuchtungslicht 8 durch eine zweite Optik 9 auf ein Beleuchtungspinhole 10 abgebildet. Das Beleuchtungslicht 8 trifft dann auf einen Strahlteiler 11. Vom Strahlteiler 11 gelangt das spektral breitbandige Beleuchtungslicht 8 auf einen Scanspiegel 12. Dem Scanspiegel 12 ist ein Objektiv 13 nachgeschaltet, das das Beleuchtungslicht 8 auf eine Probe 14 abbildet. Das von der Probe 14 reflektierte oder ausgesendete Licht definiert ein Beobachtungsstrahlengang bzw. ein Detektionslicht 15. Das Detektionslicht 15 wird auf ein Detektionspinhole 16 abgebildet, das vor einem Detektor 17 sitzt. Durch das optische Bauelement 4 ist es möglich, das für die Untersuchung der Probe 14 notwendige Laserlicht entsprechend dem gewünschten Spektrum bzw. Wellenlängenbereich zu erzeugen. Das wellenlängen- und/oder intensitätsselektierendes Mittel 7 kann z.B als SP-Modul oder als Kombination aus zwei Prismen mit verschieb- und breitenverstellbaren Spalten ausgestaltet sein. Dadurch kann vom Benutzer auf einfache Weise die zur Untersuchung der Probe 14 erforderliche Wellenlänge oder der erforderliche Wellenlängenbereich ausgewählt werden.

Wie bereits oben erwähnt, lenkt der Strahlteiler 11 das Licht auf den Scanspiegel 12. Ein Teil des Lichts tritt durch den Strahlteiler 11 hindurch und definiert einen Lichtverlust. Dieser Anteil des Lichts ist für die Beobachtung oder Messung verloren. Aus diesem Grunde ist ein Referenzdetektor 18 dem durch den Strahlteiler 11 hindurchtretenden Beleuchtungslicht 8 zugeordnet. Der Referenzdetektor 18 bestimmt das Verlustlicht und ermittelt daraus eine elektronische Größe, die an eine Regelungselektronik 20 geleitet wird. Die Regelungselektronik 20 ist mit dem wellenlängen- und/oder intensitätsselektierendes Mittel 7 verbunden. Die Regelungselektronik 20 regelt die Intensität des Beleuchtungslichts 8 in der Weise, dass an der Probe 14 immer eine konstante Lichtleistung auftrifft. Beispielsweise kann eine Regelschleife zur Lichtleistungsstabilisierung derart vorgesehen sein, dass sie parasitär die Lichtleistung im Strahlengang des Mikroskops misst und beispielsweise mit Hilfe eines akusto- oder elektrooptischen Elements, als intensitätsselektierendes Mittel 7, die Probenbeleuchtungslichtleistung konstant hält. Zu diesem Zweck könnten auch LCD-Abschwächer verwendet werden.

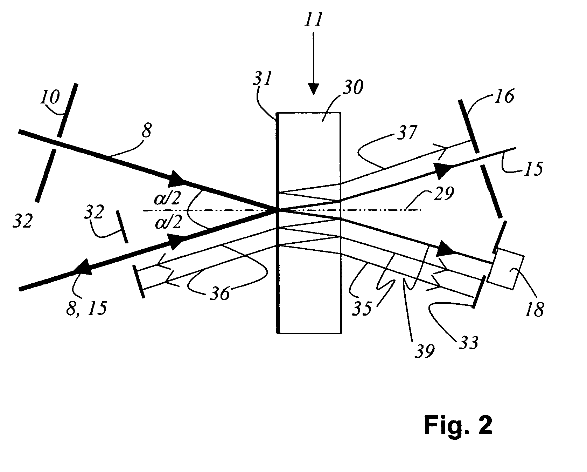

Der Strahlteiler 11 wirkt auf das Beleuchtungslicht 8 und das Detektionslicht 15 und ist als polarisations- und wellenlängenunabhängiger Strahlteiler ausgebildet und ortsfest angeordnet. In Fig. 2 ist die räumliche Lage des Strahlteilers 11 bezüglich des Beleuchtungspinholes 10 und des Detektionspinholes 16 gezeigt. Der Strahlteiler 11 besteht aus einem Substrat 30, das auf einer Seite eine Beschichtung 31 aufgebracht hat. Das Substrat 30 besteht z.B. aus Glass oder Quarz. Das Substrat besitzt ein Dicke von einigen Millimetern, damit, wie nachstehend erwähnt, die sekundären Reflexe 35, 36 durch Blenden 32, 33 eindeutig eliminiert werden. Ferner sollten die Substratflächen möglichst parallel sein, um Prismeneffekte und damit verbundene Farbfehler zu vermeiden. Die Beschichtung 31 kann z.B. aus Silber oder Aluminium bestehen und evtl. mit einer Schutzschicht (nicht dargestellt) versehen sein. Der Strahlteiler 11 ist derart im Strahlengang angeordnet, dass das Beleuchtungslicht 8 zuerst auf die Beschichtung 31 des Strahlteilers 11 trifft. Bezüglich der Senkrechten 29 auf den Strahlteiler 11 weist das Beleuchtungslicht 8 einen kleinen Winkel α/2 auf. Der Winkel α/2 liegt im Bereich zwischen 1° und 30°, was ausreicht, um die Polarisationseffekte zu vermeiden. Der größte Anteil des Beleuchtungslichts 8 wird von der Beschichtung ebenfalls unter dem Winkel α/2 reflektiert, wodurch das Beleuchtungslicht 8 in Richtung der Probe 14 umgelenkt wird. Ein kleiner Anteil des Beleuchtungslichts 8 tritt durch den Strahlteiler 11 hindurch und definiert einen Referenzstrahl 39, der nach dem Austritt aus dem Strahlteiler 11 auf den Referenzdetektor 18 trifft. Der Referenzdetektor 18 wird in der oben (Fig. 1) beschriebenen Weise verwendet. Vor dem Referenzdetektor 18 ist eine Blende 33 vorgesehen. Da Teile des in den Strahlteiler 11 eintretenden Beleuchtungslichts 8 erst nach ein- oder mehrfacher Reflexion aus dem Strahlteiler 11 austreten, treten zum Referenzstrahl 39 parallel versetzte Reflexe 35 auf. Diese Reflexe 35 werden durch die Blende 33 vom Referenzdetektor 18 abgehalten. In gleicher Weise treten an der die Beschichtung 31 aufweisenden Seite des Strahlteilers 11 Reflexe 36 auf, die zum Beleuchtungslicht 8 parallel versetzt sind. Diese Reflexe 36 werden ebenfalls durch eine Blende 32 aus dem Beleuchtungslicht 8 entfernt. Auf dem gleichen Weg, den das Beleuchtungslicht 8 zur Probe nimmt, kehrt das Detektionslicht 15 zurück, tritt durch die Beschichtung 31 und das Substrat 30 hindurch und trifft nach dem Austritt aus dem Strahlteiler 11 auf das Detektionspinhole 16. Wie bereits vorstehend beschrieben, treten auch hier durch den Strahlteiler 11 Reflexe 37 auf, die zum Detektionslicht 15 parallel versetzt sind. Diese Reflexe 37 werden durch das Detektionspinhole 16 ausgeblendet bevor sie auf den Detektor 17 (siehe Fig. 1) gelangen würden.

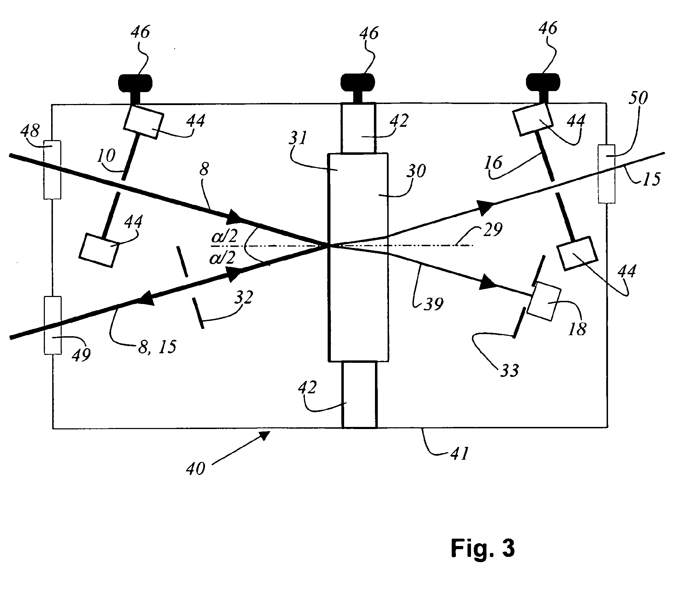

Fig. 3 zeigt den Strahlteiler 11 mit den zusätzlichen bereits in Fig. 2 beschriebenen Komponenten als ein einziges optisches Bauelement 40, das in den Strahlengang eines konfokalen Scanmikroskops eingefügt werden kann. Das Bauelement 40 besteht aus einem Gehäuse 41, das den Strahlteiler 11, das Beleuchtungspinhole 10, das Detektionspinhole 16, den Referenzdetektor 18 mit zugeordneter Blende 33 und die Blende 32 im Beleuchtungslicht 8 nach der Reflexion an der Beschichtung 31, umschließt.

Das Gehäuse 41 umfast eine erste Öffnung 48, durch die das Beleuchtungslicht 8 in das Bauelement 40 gelangt. Eine zweite Öffnung 49 ist im Gehäuse 41 vorgesehen, durch die das von der Beschichtung 31 des Substrats 30 reflektierte Beleuchtungslicht 8 aus dem Gehäuse 41 austritt und zur Probe 14 gelangt. Durch die zweite Öffnung 49 gelangt das von der Probe 14 reflektierte und/oder ausgesendete Detektionslicht 15 wieder in das Gehäuse 41. Durch eine dritte Öffnung 50 im Gehäuse 41 gelangt das den Strahlteiler 11 passierende Detektionslicht 15 über das Detektionspinhole 16 zu dem Detektor 17 (siehe Fig. 1). Der Referenzdetektor 18 ist ortsfest in Bezug auf den Strahlteiler 11 im Gehäuse 41 angeordnet. Der Strahlteiler 11 ist mit einer Halterung 42 im Gehäuse 41 montiert. Auf die Halterung 42 des Strahlteilers 11 wirkt mindestens ein Justagemittel 46, womit eine genaue Justierung oder Positionierung des Strahlteilers 11 möglich ist. Das Beleuchtungspinhole 10 und das Detektionspinhole 16 sind jeweils mit einer Halterung 44 im Gehäuse 41 montiert. Auf beide Halterungen 44 wirkt ebenfalls jeweils ein Justagemittel 46, wodurch die genaue Ausrichtung des Beleuchtungspinholes 10 bzw. des Detektionspinholes 16 einstellbar ist. Die Justagemittel 46 können z.B. von Hand durch den Benutzer verstellbar ausgestaltet sein. Ferner ist es möglich, dass die Justagemittel 46 elektromechanisch oder durch andere Mittel automatisch verstellbar ausgestaltet sind. Die Kontrolle und Steuerung der Justagemittel 46 kann durch einen Computer (nicht dargestellt) erfolgen. Die Zusammenfassung der für die Aufteilung eines Lichtstrahls erforderlichen Mittel zu dem optischen Bauelement 40 ist besonders vorteilhaft, da dieses Bauelement je nach der Konfiguration des vom Benutzer verwendeten Scanmikroskops in das Scanmikroskop eingesetzt werden kann. Ferner sind die verschiedenen Elemente, wie Strahlteiler 11, Beleuchtungspinhole 10 und Detektionspinhole 16, durch das Gehäuse 41 umschlossen, so dass eine unachtsame Verstellung der Ausrichtung der Elemente unmöglich ist.

Die Erfindung wurde in bezug auf eine besondere Ausführungsform beschreiben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Pulslaser
- 2: Laserstrahl
- 3: Einkoppeloptik
- 4: optisches Bauelement
- 5: erste Optik
- 6: breitbandiges Beleuchtungslicht
- 7: wellenlängen- und/oder intensitätsselektierendes Mittel
- 8: Beleuchtungslicht
- 9: zweite Optik
- 10: Beleuchtungspinhole
- 11: Strahlteiler
- 12: Scanspiegel
- 13: Objektiv
- 14: Probe
- 15: Detektionslicht
- 16: Detektionspinhole
- 17: Detektor
- 18: Referenzdetektor
- 20: Regelungselektronik
- 29: Senkrechte auf den Strahlteiler
- 30: Substrat
- 31: Beschichtung
- 32: Blende
- 33: Blende
- 35: Reflex
- 36: Reflex
- 38: dritter Strahlteiler
- 39: Referenzstrahl
- 40: optisches Bauelement
- 41: Gehäuse
- 42: Halterung
- 44: Halterung
- 46: Justagemittel
- 48: erste Öffnung
- 49: zweite Öffnung
- 50: dritte Öffnung

- α/2: Winkel

## Patentansprüche

1. Optisches Bauelement (40) zum Einsetzen als Modul in einen Beleuchtungs- und Detektionsstrahlengang (8, 15) eines Scanmikroskops, umfassend einen Strahlteiler (11), ein Beleuchtungspinhole (10), ein Detektionspinhole (16), einen Referenzdetektor (18) und ein Gehäuse (41),
wobei der Strahlteiler (11) einerseits das Licht in den Beleuchtungsstrahlengang (8) zum Beleuchten einer Probe (14) lenkt, wobei andererseits ein Teil des Lichts durch den Strahlteiler (11) hindurchtritt und dem Referenzdetektor (18) zugeführt wird und wobei auch das von der Probe (14) herkommende Licht durch den Strahlteiler als Detektionslicht einem Detektor (17) zuführbar ist,
wobei in dem Gehäuse (41) der im wesentlichen polarisations- und wellenlängenunabhängige Strahlteiler (11), das Beleuchtungspinhole (10), das Detektionspinhole (16) und der Referenzdetektor (18) angeordnet sind,
zum Erzielen einer Polarisationsunabhängigkeit des Strahlteilers (11) ist das optische Bauelement (40) im Beleuchtungs- und Detektionsstrahlengang (8, 15) derart angeordnet, dass das Beleuchtungslicht unter einem Winkel (α/2) im Bereich von 1° bis 30° bezüglich der Senkrechten (29) des Strahlteilers (11) auf ihn auftrifft, wobei der Strahlteiler (11) als Substrat (30) mit einer Dicke von einigen Millimetern und parallelen Substratflächen und mit einer reflektierenden Beschichtung (31) ausgebildet ist,
und wobei dem Strahlteiler (11) Beleuchtungslicht einer Lichtquelle des Scanmikroskops zugeführt ist, die mindestens einen Laser (1) und ein optisches Bauelement (4) aus mikrostrukturiertem Material umfasst, in das das Licht des Lasers (1) einkoppelbar ist und aus dem spektral breitbandiges Beleuchtungslicht austritt.

2. Optisches Bauelement (40) nach Anspruch 1, **dadurch gekennzeichnet, dass** dem Strahlteiler (11), dem Beleuchtungspinhole (10) und dem Detektionspinhole (16) jeweils mindestens ein Justagemittel (46) zugeordnet ist.

3. Optisches Bauelement (40) nach einem der vorhergehenden Ansprüche, **dadurch gekennzeichnet, dass** der Referenzdetektor (18) in einem durch den Strahlteiler (11) hindurchtretendes Licht definierten Referenzstrahl (39) angeordnet ist, der aus dem Licht des Referenzstrahls (39) eine elektronische Größe ermittelt, die an eine Regelungselektronik (20) überführbar ist.

4. Optisches Bauelement (40) nach Anspruch 3, **dadurch gekennzeichnet, dass** die Regelungselektronik (20) mit einem wellenlängen- und/oder intensitätsselektierenden Mittel (7) verbunden ist, wobei die Regelungselektronik (20) die Intensität des Beleuchtungslichts (8) derart regelt, dass an der Probe (14) immer eine konstante Lichtleistung herrscht.

5. Optisches Bauelement (40) nach einem der vorhergehenden Ansprüche, **dadurch gekennzeichnet, dass** bei dem in den Beleuchtungs- und Detektionsstrahlengang (8, 15) eingebrachten Gehäuse (41) der Strahlteiler (11) ortsfest bezüglich des Beleuchtungs- und Detektionsstrahlenganges (8, 15) angeordnet ist.

## Claims

1. An optical component (40) for insertion as a module in an illumination and detection beam path (8, 15) of a scanning microscope, comprising a beam splitter (11), an illumination pinhole (10), a detection pinhole (16), a reference detector (18) and a housing (41),
wherein the beam splitter (11), on the one hand, directs the light into the illumination beam path (8) for illumination of a specimen (14), wherein, on the other hand, a part of the light passes through the beam splitter (11) and is fed to the reference detector (18) and wherein also the light coming from the specimen (14) can be fed to a detector (17) as a detection light through the beam splitter,
wherein the beam splitter (11) which is substantially polarization-independent and wavelength-independent, the illumination pinhole (10), the detection pinhole (16) and the reference detector (18) are arranged in the housing (41),
for obtaining a polarization-independency of the beam splitter (11) the optical component (40) is arranged in the illumination and detection beam path (8, 15) such that the illumination light is incident on the beam splitter under an angle (α/2) in the range between 1° and 30° with respect to the vertical (29) of the beam splitter (11), wherein the beam splitter (11) is formed as a substrate (30) having a thickness of some millimeters and parallel substrate surfaces and having a reflective coating (31),
and wherein illumination light of a light source of the scanning microscope is fed to the beam splitter (11), which light source comprises at least one laser (1) and an optical component (4) of microstructured material into which the light of the laser (1) can be coupled and from which spectrally broadband illumination light exits.

2. The optical component (40) according to claim 1, **characterized in that** at least one adjusting device (46) each is associated with the beam splitter (11), the illumination pinhole (10) and the detection pinhole (16).

3. The optical component (40) according to one of the preceding claims, **characterized in that** the reference detector (18) is arranged in a reference beam (39) defined by light passing through the beam splitter (11), which reference detector (18) determines an electronic variable from the light of the reference beam (39), which variable can be transferred to a control electronics (20).

4. The optical component (40) according to claim 3, **characterized in that** the control electronics (20) is connected to wavelength-selecting and/or intensity-selecting means (7), wherein the control electronics (20) controls the intensity of the illumination light (8) such that there is always a constant light power at the specimen (14).

5. The optical component (40) according to one of the preceding claims, **characterized in that** in the housing (41) inserted in the illumination and detection beam path (8, 15) the beam splitter (11) is arranged stationarily with respect to the illumination and detection beam path (8, 15).

## Revendications

1. Élément optique (40) à insérer en tant que module dans une trajectoire de rayons d'éclairage et de détection (8, 15) d'un microscope à balayage, comportant un diviseur de rayon (11), un sténopé d'éclairage (10), un sténopé de détection (16), un détecteur de référence (18) et un boîtier (41),
dans lequel, d'une part, le diviseur de rayon (11) dirige la lumière dans la trajectoire du rayon d'éclairage (8) pour éclairer un échantillon (14), sachant que, d'autre part, une partie de la lumière passe à travers le diviseur de rayon (11) et est acheminée vers le détecteur de référence (18) et la lumière provenant de l'échantillon (14) peut également être acheminée en tant que lumière de détection vers un détecteur (17) par l'intermédiaire du diviseur de rayon,
dans lequel le diviseur de rayon (11) sensiblement indépendant de la polarisation et de la longueur d'onde, le sténopé d'éclairage (10), le sténopé de détection (16) et le détecteur de référence (18) sont disposés dans le boîtier (41),
afin que le diviseur de rayon (11) soit indépendant de la polarisation, l'élément optique (40) est disposé dans la trajectoire des rayons d'éclairage et de détection (8, 15) de telle sorte que la lumière d'éclairage arrive sur le diviseur de rayon (11) en formant un angle (α/2) dans une plage allant de 1° à 30° avec la verticale (29) dudit diviseur de rayon (11), ledit diviseur de rayon (11) étant réalisé sous la forme d'un substrat (30) avec une épaisseur de quelques millimètres et des surfaces de substrat parallèles et avec un revêtement (31) réfléchissant,
et dans lequel la lumière d'éclairage d'une source lumineuse du microscope à balayage est acheminée vers le diviseur de rayon (11), laquelle source lumineuse comporte au moins un laser (1) et un élément optique (4) en matériau microstructuré, dans lequel peut être injectée la lumière du laser (1) et hors de laquelle sort une lumière d'éclairage à large bande spectrale.

2. Élément optique (40) selon la revendication 1, **caractérisé en ce qu'**au moins un moyen d'ajustement (46) est associé respectivement au diviseur de rayon (11), au sténopé d'éclairage (10), et au sténopé de détection (16).

3. Élément optique (40) selon l'une quelconque des revendications précédentes, **caractérisé en ce que** le détecteur de référence (18) est disposé dans un rayon de référence (39), qui est défini par la lumière traversant le diviseur de rayon (11) et qui, à partir de la lumière du rayon de référence (39), détermine une grandeur électronique, qui peut être transmise à une électronique de réglage (20).

4. Élément optique (40) selon la revendication 3, **caractérisé en ce que** l'électronique de réglage (20) est reliée à un moyen (7) sélectionnant la longueur d'onde et/ou l'intensité, ladite électronique de réglage (20) réglant l'intensité de la lumière d'éclairage (8) de telle sorte qu'une puissance lumineuse constante règne toujours au niveau de l'échantillon (14).

5. Élément optique (40) selon l'une quelconque des revendications précédentes, **caractérisé en ce que** dans le boîtier (41), introduit dans la trajectoire des rayons d'éclairage et de détection (8, 15), le diviseur de rayon (11) est disposé de manière fixe par rapport à la trajectoire des rayons d'éclairage et de détection (8, 15) .
